# FASCICULE DE BREVET EUROPEEN

(11) **EP 0 827 588 B1**
(45) Date de publication et mention de la délivrance du brevet: **23.12.1998**
(21) Numéro de dépôt: 96914242.1
(22) Date de dépôt: 25.04.1996
(51) Int. Cl.: G01N 1/02, G01N 1/00

(54) **DISPOSITIF POUR LE PRELEVEMENT DE SUBSTANCES GAZEUSES, DE LIQUIDES, D'AEROSOLS OU MEME DE MATIERES PULVERULENTES, EN VUE DE LEUR ANALYSE IN SITU**
VORRICHTUNG ZUR PROBENAHME VON GASEN, FLÜSSIGKEITEN, AEROSOLEN ODER PULVERFÖRMIGEN STOFFEN ZWECKS IN-SITU ANALYSE
DEVICE FOR SAMPLING GASEOUS MATERIALS, LIQUIDS, AEROSOLS OR EVEN PULVERULENT MATERIALS FOR IN SITU ANALYSIS

(30) Priorité: 28.04.1995 FR 9505320
(43) Date de publication de la demande: 11.03.1998
(73) Titulaire: ETAT FRANCAIS Représenté par le Délégué Général pour l'Armement, 75007 Paris 7ème (FR); PROENGIN S.A., 78210 Saint-Cyr-l'Ecole (FR)
(72) Inventeur: BLEUSE, Patrick, F-78390 Bois-d'Arcy (FR); CLAUSIN, Pierre, F-92410 Ville-d'Avray (FR); HEURTEL, Christian, F-91710 Vert-le-Petit (FR)
(86) Numéro de dépôt international: FR9600633
(87) Numéro de publication internationale: WO9634266

(56) Documents cités:
- EP-A- 0 145 449
- EP-A- 0 447 158
- EP-A- 0 511 729
- DE-A- 3 120 362
- FR-A- 2 603 698
- FR-A- 2 660 873

## Description

La présente invention concerne un dispositif pour le prélèvement de substances gazeuses, de liquides, d'aérosols ou même de matières pulvérulentes, en vue de leur analyse in situ dans un dispositif d'analyse de compositions gazeuses.

Elle concerne notamment, mais non exclusivement, la détection de la contamination par des substances à très haute toxicité telles que celles qui sont utilisées dans les armes chimiques et qui peuvent être épandues sous la forme de gaz, de fines gouttelettes ou même de fines particules espacées les unes des autres.

Pour effectuer une telle détection, on a déjà proposé, notamment par les brevets FR 26 118 98 et 26 482 27 au nom de la Demanderesse, un appareil portatif d'analyse de composition gazeuse, associé à un dispositif permettant le prélèvement et la vaporisation de la substance à analyser.

Selon le brevet FR 2 648 227, le dispositif de prélèvement comprend une languette souple portant une résistance chauffante électrique servant à vaporiser les substances collectées par la languette.

Il s'avère que ce dispositif nécessite obligatoirement l'intervention d'un opérateur : Celui-ci doit effectuer les prélèvements puis procéder à la vaporisation des substances liquides prélevées, de telle sorte que les vapeurs produites soient aspirées par l'appareil d'analyse en tant que composition gazeuse à analyser.

L'invention a plus particulièrement pour but de parvenir à ces résultats sans l'aide d'un quelconque opérateur de manière à pouvoir utiliser l'ensemble dispositif de prélèvement/dispositif d'analyse à la façon d'une sonde autonome placée sur un site pour pouvoir détecter instantanément la présence d'une contamination ou d'une pollution atmosphérique.

Pour parvenir à ce résultat, le dispositif de prélèvement selon l'invention comprend un collecteur présentant une surface collectrice exposée à l'atmosphère dont on veut détecter la contamination éventuelle, un organe de prélèvement venant au contact de ladite surface collectrice, sur une zone de dimensions réduites, des moyens permettant d'effectuer un déplacement relatif entre ledit organe de prélèvement et ladite surface, de manière à ce que celle-ci soit balayée par ledit organe de prélèvement, au cours d'au moins une séquence de balayage, des moyens de chauffage associés auxdits moyens de prélèvement pour effectuer une vaporisation des matières contaminantes éventuellement collectées au cours de la séquence de balayage et une buse d'aspiration destinée à venir se connecter sur l'orifice d'admission d'un appareil d'analyse de compositions gazeuses, cette buse étant conformée de manière à pouvoir aspirer les vapeurs de matières contaminantes produites par les moyens de chauffage.

Avantageusement, la susdite buse d'aspiration pourra comporter un registre permettant d'effectuer :
- soit une aspiration de l'atmosphère ambiante, de manière à effectuer une analyse de la composition gazeuse de cette atmosphère,
- soit une aspiration des vapeurs engendrées par les moyens de chauffage, pour détecter la présence de matières contaminantes solides ou liquides déposées sur la surface collectrice et collectés par l'organe de prélèvement.

Par ailleurs, le dispositif de prélèvement pourra comprendre un automatisme permettant de mettre en oeuvre les moyens de chauffage et l'appareil d'analyse à la fin de la séquence de balayage.

Des modes d'exécution de l'invention seront décrits ci-après, à titre d'exemples non limitatifs, avec référence aux dessins annexés dans lesquels :

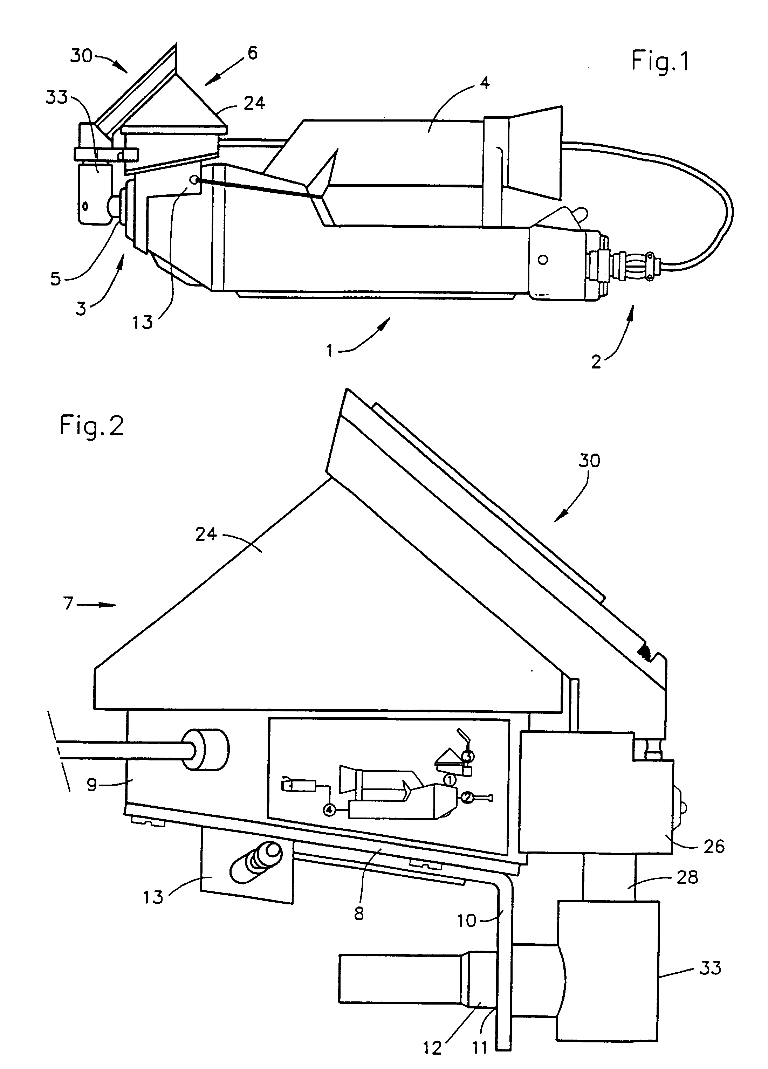

La figure 1 est une vue en élévation latérale d'un appareil d'analyse de composition gazeuse équipé d'un dispositif de prélèvement selon l'invention ;
La figure 2 est une vue en élévation, à plus grande échelle, du dispositif de prélèvement représenté sur la figure 1 ;
La figure 3 est une vue en coupe partielle de l'organe de prélèvement et de la buse d'aspiration qui lui est associé ;
La figure 4 est une vue en coupe axiale du collecteur.

Dans cet exemple, l'appareil d'analyse de composition gazeuse consiste en un appareil portatif et autonome pour l'analyse par spectrophotométrie de flamme du type de celui qui se trouve décrit dans le brevet FR No 87 02762 au nom de la Demanderesse.

Cet appareil comprend un corps 1 de forme allongée présentant, d'un côté, des moyens de connexion électrique 2 et, de l'autre côté, une tête d'aspiration 3 des gaz que l'on veut analyser. Sa préhension est assurée par une poignée 4 renfermant un générateur délivrant l'hydrogène qui participe à la combustion du gaz à analyser en vue de produire la flamme dont on effectue l'analyse spectrographique.

Cet appareil fait intervenir un brûleur muni d'une fenêtre équipée d'une optique focalisante dans l'axe de laquelle sont disposés un hacheur rotatif comportant une pluralité de filtres optiques correspondant chacun à un élément recherché, et une cellule optoélectronique placée dans la zone de focalisation de l'optique.

Le signal électrique délivré par la cellule est transmis à un circuit électronique de traitement permettant de déterminer et d'afficher sur un afficheur la teneur du gaz en composants recherchés. Dans le cadre de cette application, il comprend des moyens permettant de déclencher une alerte et, éventuellement, de transmettre à distance un signal d'alarme à la suite de la détection d'un composant recherché.

L'admission du gaz à analyser (habituellement l'air ambiant) à l'intérieur du brûleur est assurée au moyen d'une turbine et d'un conduit d'admission qui débouche à l'extérieur par un orifice 5 pratiqué dans la tête d'aspiration 3.

Le dispositif de prélèvement amovible 6 associé à l'appareil d'analyse 1 est conçu de manière à venir se monter, à l'aide de moyens d'assemblage et de fixation facilement déconnectables sur la tête d'aspiration 3 de l'appareil.

Il comprend un collecteur 7 comportant un boîtier de forme sensiblement cylindro-tronconique dont la base 8, qui referme la partie cylindrique 9, s'étend obliquement par rapport à l'axe général de symétrie XX'. Sur cette base 8 est fixée une pièce d'assemblage 10, en forme de cornière, dont l'une des ailes est munie d'un évidement 11 dans lequel passe un embout 12 destiné à s'engager dans l'orifice 5 de la tête d'aspiration 3.

Le boîtier du collecteur 7 contient un moteur électrique coaxial 15 dont l'arbre de sortie 20 passe au travers de la petite base constituant le sommet de la partie tronconique.

L'alimentation de ce moteur 15 en énergie électrique est assurée par l'appareil d'analyse 1, grâce à un câble venant se connecter sur les moyens de connexion électriques 2.

L'arbre 20, entraîne en rotation, grâce à une clavette 21, une pièce d'entraînement, de forme sensiblement conique 22 qui s'étend parallèlement et à faible distance de la partie tronconique 18. L'étanchéité dynamique entre ces deux pièces est alors assurée grâce à l'emploi d'un joint torique 23 de section en forme de X.

Sur la pièce d'entraînement 22 peut être disposée une calotte collectrice 24 coaxiale dont la face extérieure convexe conique constitue la surface collectrice qui est destinée à être exposée à l'atmosphère dont on veut mesurer la contamination.

Par ailleurs, cette calotte collectrice 24 comprend, le long de l'une de ses génératrices, une gorge 25 dont le rôle sera expliqué ci-après.

Sur la face latérale cylindrique 9 du boîtier est fixée par vissage une pièce de fixation 26 présentant un perçage traversant 27 axé parallèlement à l'axe XX' du boîtier et débouchant dans une région située en regard de la tête d'aspiration 3, lorsque le dispositif de prélèvement 7 est en position assemblée sur l'appareil d'analyse 1.

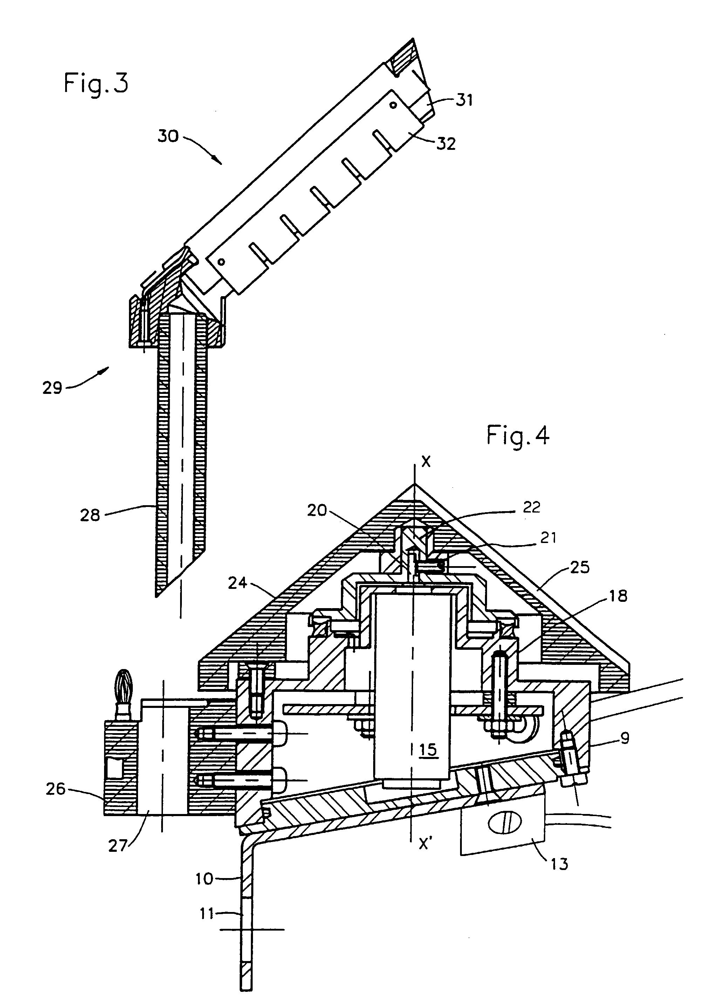

Dans ce perçage 27 vient s'engager un tronçon tubulaire 28 d'un collecteur/évaporateur 29 du type de celui représenté sur la figure 3.

Ce collecteur/évaporateur 29 comprend une rampe de prélèvement et de chauffage 30 montée à l'extrémité supérieure du tronçon 28 et comportant, à l'intérieur d'un support 31 en forme de gouttière, un balai 32 destiné à venir en appui sur la surface collectrice de la calotte 24, sensiblement sur toute la longueur de sa génératrice.

A cet effet, le support 31 et le balai 32 sont orientés de manière à ce que, lorsque le tronçon 28 est engagé à fond dans le perçage 27, le support 31 délimite avec la surface collectrice, un canal en communication avec le volume intérieur du tronçon 28 et que le balai 32 vienne s'appliquer sur ladite surface, pour retenir les éléments pollués qui s'y seraient éventuellement déposés.

Dans cet exemple, le balai 32 se présente sous la forme d'une languette souple éventuellement recouverte d'une couche absorbante, et portant une résistance électrique chauffante. L'alimentation de cette résistance électrique est assurée par la source d'énergie électrique de l'appareil d'analyse 1 et est commandée par un interrupteur lorsque le balai 32 se trouve en regard de la gorge 25.

Par ailleurs, l'extrémité inférieure du manchon 28 est connectée, de façon étanche, à la tête d'aspiration 5 de l'appareil 1 grâce à un élément de raccord en T, 33.

Ainsi, lors d'une phase d'analyse, l'appareil 1 aspire un flux d'air qui circule successivement dans la rampe 30, dans le tronçon 28 et dans le raccord 33.

Le fonctionnement du dispositif de prélèvement précédemment décrit est alors le suivant :

Tout d'abord, l'ensemble constitué par le dispositif de prélèvement 6 monté sur l'appareil portatif d'analyse 1 est placé sur le site que l'on veut surveiller, l'axe du moteur 15 et de la calotte collectrice 24 étant orienté verticalement. La calotte présente sa convexité orientée vers le haut de manière à être exposée à la contamination par les éléments recherchés. Cette contamination peut consister par exemple en un brouillard de fines gouttelettes en suspension dans l'air.

La mise en marche de l'appareil 1 commande l'exécution d'une succession de cycles de fonctionnement comprenant chacun :
- la rotation de la calotte collectrice 24 sur un tour complet, de manière à ce que la gorge 25 qui se trouvait initialement au droit de la rampe de prélèvement 30 retourne à sa position initiale après avoir effectué une rotation de 360°,
- une phase de chauffage du balai 32, de manière à vaporiser les matières polluantes ou toxiques qui se sont éventuellement déposées sur la surface collectrice et qui ont été recueillies par le balai au cours de la rotation de la calotte 24,
- simultanément à la phase de chauffage, une séquence d'analyse au cours de laquelle l'appareil d'analyse 1 aspire l'atmosphère gazeuse contenue dans la rampe de prélèvement 30, via le manchon 28 et le raccord 33 et procède à l'analyse spectrophotométrique de cette atmosphère gazeuse (éventuellement chargée de vapeurs de matières polluantes ou toxiques recueillies).

Dans le cas où cette analyse révèle la présence d'un élément recherché, l'appareil 1 déclenche un signal d'alerte par exemple lumineux et/ou sonore et, éventuellement, la transmission d'un message d'alarme par exemple par voie hertzienne.

Bien entendu, les cycles de fonctionnement pourront se succéder de façon continue ou discontinue, selon une périodicité préétablie, éventuellement réglable.

Il apparaît que l'usage d'une calotte 24, de forme conique, présente l'avantage de permettre l'écoulement de l'eau, en cas de pluie, ainsi que des particules solides amenées par le vent qui pourraient altérer le fonctionnement de l'appareil 1.

La gorge 25 prévue dans la calotte 24 présente, quant à elle, les avantages suivants. Elle permet notamment :
- d'éviter que le chauffage effectué au niveau du balai 32 ne puisse détériorer la calotte 24,
- de mieux canaliser vers le tronçon tubulaire 28 le flux d'air aspiré par l'appareil d'analyse 1,
- d'éliminer les particules retenues par le balai 32 lors de la rotation de la calotte 24,
- de nettoyer le balai 32 grâce à l'action de son bord (qui effectue un effet de raclage sur la partie du balai 32 exposée aux souillures).

Avantageusement, le manchon tubulaire 28 et/ou l'élément de raccord 33 pourront être équipés d'un registre permettant de connecter la tête d'aspiration 3 directement à l'atmosphère, sans passer par la rampe 30, de manière à pouvoir faire alterner des phases d'analyse, de la composition gazeuse de l'air ambiant et des phases de détection de la présence de substances contaminantes sous forme liquide ou solide en suspension dans l'air.

Bien entendu, l'invention ne se limite pas au mode d'exécution précédemment décrit.

Ainsi, la surface collectrice pourrait présenter une forme différente de celle d'une calotte conique : elle pourrait par exemple être plane et animée d'un mouvement de translation continu (déroulement d'un film) ou alternatif. Elle pourrait être éventuellement cylindrique et être disposée coaxialement à la tête d'aspiration.

De même, le balai 32 pourra être conçu de manière à pouvoir absorber sélectivement et donc concentrer les produits que l'on souhaite mettre en évidence. Il pourra être par exemple revêtu d'un gel de silice déposé en surface et tenu par du silicone, et être formé par la juxtaposition de plusieurs éléments de languette.

## Revendications

1. Dispositif de prélèvement in situ de substances gazeuses, de liquides d'aérosols ou même de matières pulvérulentes, ce dispositif étant conçu de manière à pouvoir se connecter sur un appareil d'analyse de compositions gazeuses (1),
caractérisé en ce qu'il comprend un collecteur (7) présentant une surface collectrice (24) exposée à l'atmosphère dont on veut détecter la contamination éventuelle, un organe de prélèvement (30, 31, 32) venant au contact de ladite surface collectrice (24), sur une zone de celle-ci présentant des dimensions réduites, des moyens (15) permettant d'effectuer un déplacement relatif entre ledit organe de prélèvement (30, 31, 32) et ladite surface, de manière à ce que celle-ci soit balayée par ledit organe de prélèvement, au cours d'au moins une séquence de balayage, des moyens de chauffage associés auxdits moyens de prélèvement (30, 31, 32) pour effectuer une vaporisation des matières contaminantes éventuellement collectées au cours de la séquence de balayage et une buse d'aspiration (28) destinée à venir se connecter sur l'orifice d'admission (5) de l'appareil d'analyse (1), cette buse (28) étant conformée de manière à pouvoir aspirer les vapeurs de matières contaminantes produites par les moyens de chauffage.

2. Dispositif selon la revendication 1,
caractérisé en ce que la surface collectrice (24) est mobile en rotation.

3. Dispositif selon la revendication 2,
caractérisé en ce que le susdit collecteur comprend une calotte collectrice (24) mobile en rotation et dont la face convexe, de forme conique, constitue la susdite surface collectrice.

4. Dispositif selon la revendication 3,
caractérisé en ce que la surface collectrice (24) comprend une gorge (25) qui s'étend le long de l'une de ses génératrices.

5. Dispositif selon l'une des revendications précédentes,
caractérisé en ce que la susdite buse d'aspiration (25) communique avec une rampe de prélèvement (31) en forme de gouttière contenant un balai (32) disposé de manière à venir en appui sur la surface collectrice (24), le long de sa génératrice, ce balai (32) constituant le susdit organe de prélèvement.

6. Dispositif selon la revendication 5,
caractérisé en ce que le susdit balai (32) se présente sous la forme d'une languette souple portant une résistance électrique chauffante.

7. Dispositif selon la revendication 6,
caractérisé en ce que la susdite languette est formée par la juxtaposition de plusieurs éléments de languette.

8. Dispositif selon l'une des revendications 6 et 7,
caractérisé en ce que la susdite languette est recouverte d'une couche absorbante.

9. Dispositif selon la revendication 8,
caractérisé en ce que le balai (32) est conçu de manière à absorber sélectivement les produits que l'on veut détecter.

10. Dispositif selon l'une des revendications précédentes,
caractérisé en ce qu'il comprend un registre permettant de connecter l'orifice d'admission (5), soit à l'atmosphère, soit à la susdite buse d'aspiration.

## Patentansprüche

1. Vorrichtung zur Probenahme in situ von gasförmigen Substanzen, Flüssigkeiten, Aerosolprodukten und sogar pulverförmigen Materien, wobei diese Vorrichtung so gestaltet ist, daß sie an ein Gerät zur Analyse von gasförmigen Zusammensetzungen (1) angeschlossen werden kann,
dadurch gekennzeichnet, daß sie einen Kollektor (7), dessen Sammelfläche (24) der Atmosphäre, deren eventuelle Verseuchung ermittelt werden soll, ausgesetzt wird, ein mit der besagten Sammelfläche (24) in einer Zone mit reduzierten Abmessungen in Kontakt tretendes Probenahmeorgan (30, 32, 32), Hilfsmittel (15) zum Ausüben einer relativen Verschiebung zwischen dem besagten Probenahmeorgan (30, 31, 32) und der besagten Fläche, so daß diese von dem besagten Probenahmeorgan während mindestens einer Abtastsequenz abgetastet wird, Heizhilfsmittel in Verbindung mit den besagten Probenahmehilfsmitteln (30, 32, 32) zum Durchführen einer Vaporisation der eventuell während der Abtastsequenz angesammelten verseuchenden Materien, sowie eine Ansaugdüse (28), welche an die Einlaßöffnung (5) des Analysegerätes (1) angeschlossen wird, wobei diese Düse (28) so ausgelegt ist, daß sie die Dämpfe der von den Heizhilfsmitteln erzeugten verseuchenden Materien ansaugen kann, umfaßt.

2. Vorrichtung gemäß Patentanspruch 1, dadurch gekennzeichnet, daß die Sammelfläche (24) in Drehung beweglich ist.

3. Vorrichtung gemäß Patentanspruch 2, dadurch gekennzeichnet, daß der vorstehend genannte Kollektor aus einer in Drehung beweglichen Sammelkappe (24) besteht, deren kegelförmige, gewölbte Seite die vorstehend genannte Sammelfläche bildet.

4. Vorrichtung gemäß Patentanspruch 3, dadurch gekennzeichnet, daß die Sammelfläche (24) eine Kehle (25) aufweist, welche sich entlang eines ihrer Generatoren erstreckt.

5. Vorrichtung gemäß einem der vorstehenden Patentansprüche, dadurch gekennzeichnet, daß die vorstehend genannte Ansaugdüse (25) mit einer rinnenförmigen Probenahmerampe (31) in Verbindung steht, welche mit einer sich entlang ihres Generators auf die Sammelfläche (24) stützenden Bürste (32) ausgestattet ist, wobei diese Bürste (32) das vorstehend genannte Probenahmeorgan bildet.

6. Vorrichtung gemäß Patentanspruch 5, dadurch gekennzeichnet, daß die vorstehend genannte Bürste (32) die Form einer flexiblen Zunge aufweist, welche einen elektrischen Heizwiderstand trägt.

7. Vorrichtung gemäß Patentanspruch 6, dadurch gekennzeichnet, daß die vorstehend genannte Zunge durch das Nebeneinanderreihen von mehreren Zungenelementen gebildet wird.

8. Vorrichtung gemäß einem der Patentansprüche 6 und 7, dadurch gekennzeichnet, daß die vorstehend genannte Zunge mit einer absorbierenden Schicht versehen ist.

9. Vorrichtung gemäß Patentanspruch 8, dadurch gekennzeichnet, daß die Bürste (32) so gestaltet ist, daß sie ein selektives Absorbieren der zu ermittelnden Produkte ermöglicht.

10. Vorrichtung gemäß einem der vorstehenden Patentansprüche, dadurch gekennzeichnet, daß sie mit einem Schieber ausgestattet ist, der es ermöglicht, die Einlaßöffnung (5) entweder mit der Atmosphäre oder mit der vorstehend genannten Ansaugdüse zu verbinden.

## Claims

1. Apparatus for sampling, in situ, gaseous substances, liquids, aerosols, or even materials in powder form, the apparatus being designed to be suitable for being connected to an analyzer (1) for analyzing gaseous compositions;
said apparatus being characterized in that it comprises a collector (7) having a collector surface (24) exposed to the atmosphere in which any contamination is to be detected, a sampling member (30, 31, 32) coming into contact with said collector surface (24) over a zone thereof of small dimensions, means (15) enabling said sampling member (30, 31, 32) and said surface to be moved relative to each other, so that said surface is wiped by said sampling member, during at least one wiping sequence, heater means associated with said sampling means (30, 31, 32) so as to vaporize any contaminant materials collected during the wiping sequence, and a suction nozzle (28) organized to be connectable to the intake orifice (5) of the analyzer (1), said nozzle (28) being shaped so as to be able to suck in the contaminant material vapor produced by the heater means.

2. Apparatus according to claim 1, characterized in that the collector surface (24) is mounted to rotate.

3. Apparatus according to claim 2, characterized in that said collector comprises a collector cap (24) mounted to rotate and having a conical convex face that constitutes said collector surface.

4. Apparatus according to claim 3, characterized in that the collector surface (24) is provided with a groove (25) which extends along one of the generator lines of said surface.

5. Apparatus according to any preceding claim, characterized in that said suction nozzle (25) communicates with a trough-shaped sampling arm (31) containing a wiper (32) disposed to come into abutment against the collector surface (24) along the generator line thereof, the wiper (32) constituting said sampling member.

6. Apparatus according to claim 5, characterized in that said wiper (32) is in the form of a flexible tongue carrying a heating resistor.

7. Apparatus according to claim 6, characterized in that said tongue is formed by juxtaposing a plurality of tongue elements.

8. Apparatus according to claim 6 or 7, characterized in that said tongue is covered with an absorbant layer.

9. Apparatus according to claim 8, characterized in that the wiper (32) is organized to absorb selectively the substances that are to be detected.

10. Apparatus according to any preceding claim, characterized in that it is provided with a register enabling the intake orifice (5) to be connected either to the atmosphere or to said suction nozzle.
